# FASCICULE DE BREVET EUROPEEN

(11) **EP 0 753 655 B1**
(45) Date de publication et mention de la délivrance du brevet: **22.09.1999**
(21) Numéro de dépôt: 96401496.3
(22) Date de dépôt: 08.07.1996
(51) Int. Cl.: F02K 7/10, F02K 3/10

(54) **Mât d'injection refroidi pour statoréacteur**
Brennstoffeinspritzstrebe für Staustrahltriebwerk
Cooled fuel injection strut for ramjet

(30) Priorité: 11.07.1995 FR 9508346
(43) Date de publication de la demande: 15.01.1997
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Ferrandon, Olivier, 78200 Mantes la Jolie (FR); Indersie, Dominique, 27200 Vernon (FR)
(74) Mandataire: Thévenet, Jean-Bruno

(56) Documents cités:
- DE-B- 1 232 478
- GB-A- 459 924
- US-A- 3 727 409
- US-A- 3 925 983
- O.A.BUCHMANN,AIRESEARCH MANUF. CO.,CALIFORNIA.: "Thermal-Structural Design study of an Airframe-Integrated Scramjet." , NATIONAL AERONAUTICS AND SPACE ADMINISTRATION-CONTRACTOR REPORT 3141 XP002016864 * page 11,"Strut flow routing"* * page 12; figure 9 * * page 13; figure 10 * * page 15,"Coolant passage design",p.16,fig.12 * * pages 17-18,"Leading edges-Coolant routing;Fig.13 * * pages 20-21,"Fuel-injection struts";Fig.14 *

## Description

### Domaine technique

La présente invention concerne un mât d'injection de combustible pour propulseur sans compresseur d'air du type statoréacteur ou superstatoréacteur.

### Art antérieur

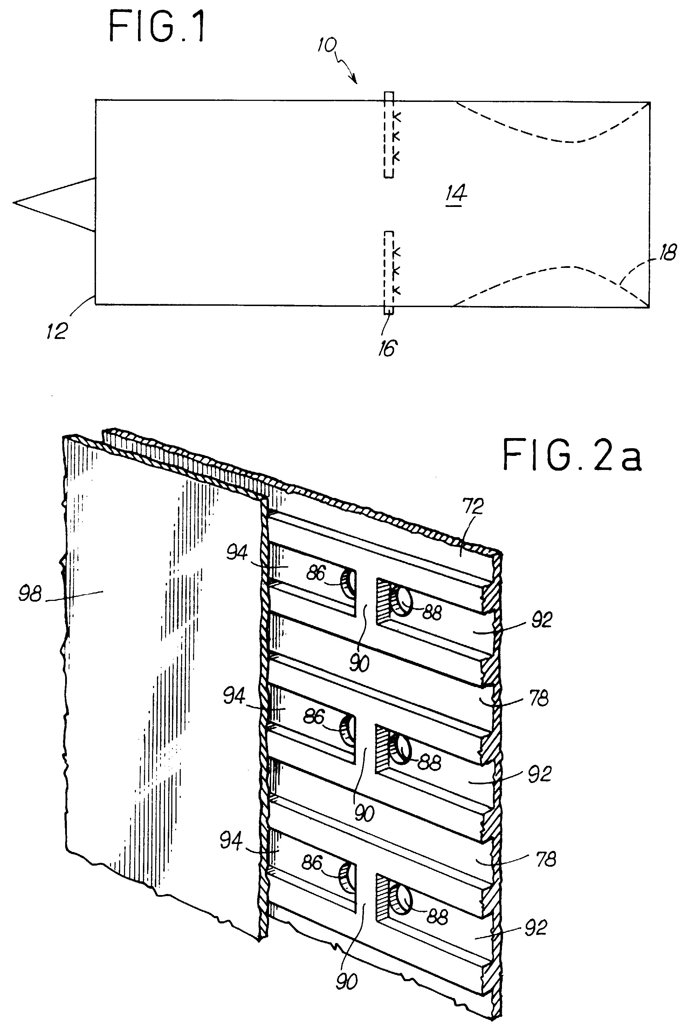

Un statoréacteur ou un superstatoréacteur est un moteur destiné à propulser un engin de locomotion aérienne à très grande vitesse. La plage de fonctionnement de tels moteurs s'étend classiquement de Mach 2 à Mach 5 pour un statoréacteur et de Mach 6 à Mach 12 pour un superstatoréacteur. Comme le montre schématiquement la figure 1, ces propulseurs 10 qui ne comportent pas de pièces mobiles utilisent l'air atmosphérique comme comburant et par exemple l'hydrogène comme combustible. L'air est admis par une entrée d'air 12 où il est comprimé aérodynamiquement par réduction de la section de passage tout en gardant un nombre de Mach supersonique. Il traverse ensuite une chambre de combustion 14 dans laquelle est injecté le combustible par des rampes (souvent circulaires) ou mâts d'injection 16 disposés au centre de cette chambre, au coeur de l'écoulement, de telle sorte que soit assuré un mélange uniforme de ce combustible et de l'air préalablement comprimé. Une tuyère 18 reliée à la chambre 14 assure à sa sortie la détente des gaz de combustion et par réaction la propulsion de l'engin.

Du fait de sa compression, l'air arrivant sur les mâts d'injection présente une température très élevée (de 1650K à Mach 6 à 5000K à Mach 12 par exemple) et il est donc indispensable de refroidir ces mâts pour assurer leur tenue mécanique. Toutefois, ceci n'est pas sans poser de sérieuses difficultés, notamment au niveau de l'alimentation en fluide de refroidissement.

Classiquement (voir par exemple "Thermal-structured design study of an airframe-integrated sramjet" NASA CR 3141 N79-33209), le refroidissement de tels mâts d'injection est réalisé par le centre du mât qui est traversé à cet effet de plusieurs cavités, en général disposées perpendiculairement à l'écoulement, et dont certaines sont remplies d'un fluide de refroidissement. Toutefois, des problèmes de réalisation empêchent de réaliser un bord d'attaque avec un rayon externe de faible dimension (typiquement de l'ordre de 1,5mm) et d'assurer simultanément le refroidissement correct de ce bord d'attaque, notamment avec de l'hydrogène gazeux à 300K. D'autre part, le refroidissement d'injecteurs latéraux de grande taille (c'est à dire avec un diamètre de l'ordre de 5mm) n'a pas été envisagé jusqu'à présent.

### Objet et définition de l'invention

La présente invention a pour objet de pallier les inconvénients précités et de proposer un mât d'injection qui assure une tenue mécanique satisfaisante pour des vitesses de vol supersonique à Mach élevé et, plus précisément, pour des vitesses comprises entre Mach 6 et Mach 8. Notamment, un but de l'invention est d'éviter qu'un déséquilibre thermique dans le mât entraîne des dilatations importantes ou des déformations inacceptables de celui-ci.

Ces buts sont atteints par un mât d'injection comportant un corps placé dans un écoulement d'air chaud, ce corps comportant des tuyères d'injection de combustible et une pluralité de cavités percées dans ce corps perpendiculairement à cet écoulement d'air et occupant l'ensemble de l'espace intérieur de ce corps pour ne laisser subsister qu'une structure formée de première et seconde parois latérales et de nervures internes séparant ces différentes cavités, certaines de ces cavités constituant des cavités d'alimentation en combustible des tuyères d'injection, caractérisé en ce qu'il comporte un circuit de refroidissement formé à partir de canaux de refroidissement disposés en superposition sur chacune des parois latérales de ce corps selon une pluralité de niveaux et alimentés en fluide de refroidissement, à chaque niveau successif alternativement sur l'une ou l'autre des faces de ce mât, à partir d'une cavité d'alimentation en fluide de refroidissement percée dans ce corps perpendiculairement à l'écoulement d'air.

Avantageusement, la cavité d'alimentation en fluide de refroidissement est située au plus près d'une extrémité amont du mât, dans une partie de ce mât où la section est la plus grande possible pour permettre un passage du fluide de refroidissement avec un débit élevé.

Cette cavité comporte au niveau de chaque canal de refroidissement deux orifices de calibrage destinés à assurer une répartition uniforme du fluide de refroidissement dans ce canal quel que soit le trajet parcouru par le fluide de refroidissement sur l'une ou l'autre face du mât. Les orifices sont réalisés sur l'une des parois latérales. Le mât comporte en outre une paroi de séparation placée dans chaque canal de refroidissement en sortie des orifices de calibrage et destinée à diviser le fluide de refroidissement en deux flux séparés pour le refroidissement de chacune des faces du mât.

De préférence, la cavité d'alimentation en fluide de refroidissement est constituée par l'une des cavités d'alimentation en combustible.

Le mât d'injection selon l'invention comporte des tuyères d'injection latérales débouchant sur chacune des parois latérales, alimentées à partir d'une cavité centrale percée dans le corps perpendiculairement à l'écoulement d'air. En outre, au niveau de ces tuyères d'injection latérales, les deux canaux de refroidissement immédiatement voisins situés en amont de chaque tuyère se confondent en un seul canal pour se reformer en aval, les débits de refroidissement se répartissant uniformément entre les deux canaux.

Dans un mode de réalisation préférentiel, le mât comporte en outre un circuit de refroidissement indépendant comportant une cavité spécifique d'alimentation disposée au niveau de l'extrémité amont de ce mât, perpendiculairement à l'écoulement d'air, et dans laquelle circule le fluide de refroidissement. Ainsi, il est possible de mieux répondre au besoin important de refroidissement du bord d'attaque du mât et de réaliser au moins un bord d'attaque aussi fin que nécessaire.

Conformément à l'invention, le mât comporte une tuyère d'injection d'extrémité aval qui débouche dans une cavité percée dans le corps perpendiculairement à l'écoulement de l'air, au plus près d'une extrémité aval du mât, et alimentée par le fluide de refroidissement issu des différents canaux de refroidissement.

Le mât selon l'invention est particulièrement destiné à être mis en oeuvre dans un propulseur sans compresseur d'air dont le combustible (l'hydrogène) constitue également le fluide de refroidissement.

### Description succincte des dessins

D'autres caractéristiques et avantages de la présente invention ressortiront mieux de la description suivante, faite à titre indicatif et non limitatif, en regard des dessins annexés, sur lesquels:
- la figure 1 représente de façon très schématique un propulseur sans compresseur d'air du type statoréacteur,
- la figure 2 montre en perspective externe un mât d'injection selon l'invention,
- la figure 2a illustre en détail la superposition des canaux de refroidissement avec leurs orifices de distribution alternés,
- les figures 3 et 4 sont des vues en coupe selon les axes III-III et IV-IV du mât de la figure 2 au niveau de deux canaux de refroidissement superposés, et
- la figure 5 montre une variante de réalisation du bord d'attaque du mât de la figure 2.

### Description d'un mode de réalisation préférentiel

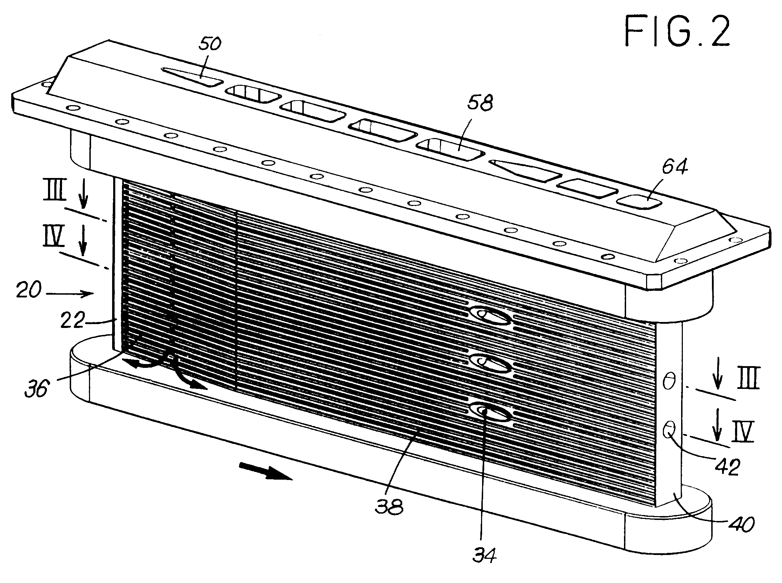

On décrira tout d'abord un premier exemple de réalisation d'un mât d'injection selon l'invention en regard des figures 2 à 4. Un mât d'injection et plus généralement un système d'injection refroidi pour statoréacteur ou superstatoréacteur est situé dans la plupart des cas au centre de la veine chaude traversant la chambre de combustion de l'engin, ce qui implique le recours à une alimentation centrale en fluide de refroidissement. Le mât dont la géométrie est déterminée essentiellement par les caractéristiques fonctionnelles aérodynamiques désirées pour le propulseur (compression, longueur d'allumage, pénétration et mélange du combustible) présente un corps 20 de la forme générale d'un prisme droit à base pentagonale formé par l'association, le long d'une face commune de liaison, d'un prisme droit à base triangulaire (la section de ce prisme étant un triangle isocèle dont l'angle au sommet est très aigu) et d'un prisme droit à base rectangulaire (la section de ce prisme étant un rectangle dont les grands côtés présentent des dimensions beaucoup plus importantes que les petits côtés). On notera que la face commune de liaison entre ces deux prismes constitue d'une part la face de base du prisme triangulaire et d'autre part une face de petit côté du prisme rectangulaire.

Le bord d'attaque ou amont du mât d'injection 20 est constitué par une arête 22 du prisme triangulaire, plus précisément par celle s'étendant du sommet de son triangle de base, qui joue un rôle de compresseur pour l'air admis par l'entrée d'air 12. Deux faces 24, 26 du prisme triangulaire issues de cette arête rejoignent, au niveau des arêtes de la face commune de liaison entre les prismes, deux faces parallèles du prisme rectangulaire pour former les deux flancs de ce mât, lesquels sont percés chacun, à une distance déterminée de cette face de liaison commune, d'une première rangée de tuyères d'injection latérales 32, 34 qui définissent en amont des premières parties de faces 28, 30 assurant un découplage entre l'entrée d'air 12 et la chambre de combustion 14 et en aval des secondes parties de faces 36, 38 qui délimitent cette chambre de combustion. Une dernière face du prisme rectangulaire, perpendiculaire aux deux faces parallèles précédentes, relie les secondes parties de faces entre elles pour constituer le bord aval 40 du mât d'injection que traverse une seconde rangée de tuyères d'injection d'extrémité 42.

Les différentes rangées de tuyères d'injection 32, 34, 42 sont alimentées en combustible à partir de cavités d'alimentation respectives (50, 58 et 64) percées dans le corps du mât 20 perpendiculairement à l'écoulement d'air. Des autres cavités (52-56,60,62) qui sont séparées entre elles ou d'avec une cavité d'alimentation par des nervures internes (par exemple la nervure 68 entre la cavité 56 et la cavité d'alimentation 58) sont également prévues pour occuper avantageusement l'ensemble de l'espace intérieur du mât à l'exception de parois latérales 70, 72 pourvues d'une épaisseur minimale nécessaire pour assurer la rigidité et la tenue mécanique de ce mât, notamment à leur jonction 66, au niveau du bord d'attaque 22. Ces autres cavités permettent l'allègement du mât d'injection par une réduction de masse et une limitation des contraintes thermomécaniques.

Le mât d'injection est pourvu d'un circuit de refroidissement qui doit assurer un refroidissement important du bord d'attaque 22 comme un refroidissement homogène des deux flancs de ce mât 24, 28, 36; 26, 30, 38 et de sa face d'extrémité aval 40.

Conformément à l'invention, le refroidissement des deux flancs du mât et de sa face d'extrémité aval 40 est assuré par une pluralité de canaux de refroidissement 74, 76, 78; 92, 96, 98, superposés sur une pluralité de niveaux, dans lesquels le fluide de refroidissement circule parallèlement à l'écoulement d'air. Ce fluide de refroidissement qui peut avantageusement être constitué par une partie du combustible, est prélevé à partir d'une des cavités d'alimentation en combustible précitées, avantageusement située au plus près de l'extrémité amont du mât, et est distribué à chacun de ces niveaux alternativement, sur un flanc puis l'autre du mât (voir cette alternance de distribution du fluide de refroidissement tantôt sur une face tantôt sur l'autre face sur le détail de la figure 2a). Une parfaite symétrie dans la distribution du fluide de refroidissement est ainsi assurée garantissant une homogénéisation des répartitions du fluide ainsi qu'une homogénéisation des températures de refroidissement. En outre, l'absence de création de forces perpendiculaires à l'axe de l'engin permet d'assurer un meilleur rendement de fonctionnement.

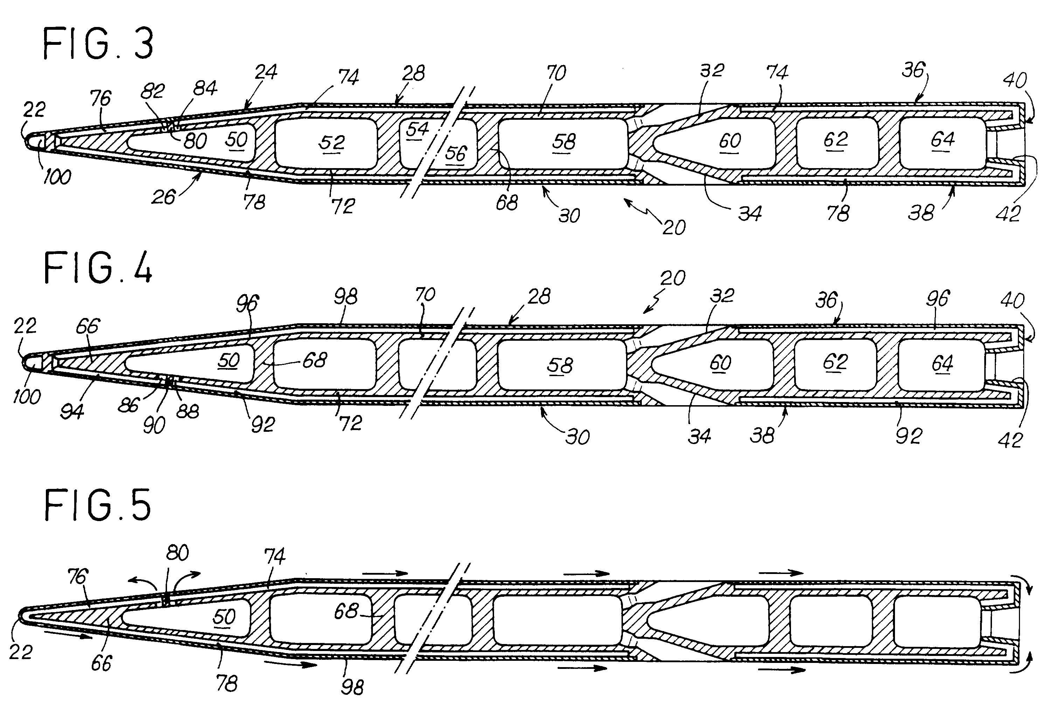

Le parcours effectué par le fluide de refroidissement peut être observé sur la figure 3 qui montre une vue en coupe réalisée selon l'axe III-III de la figure 2 au niveau d'un canal de refroidissement déterminé et passant successivement par un ensemble de deux tuyères d'injection latérales 32, 34 et par une tuyère d'extrémité 42. Ce fluide qui circule dans la cavité 50 est introduit dans le circuit de refroidissement par des orifices 82, 84 pratiqués dans la première paroi latérale 70 au niveau de cette cavité et débouchant de part et d'autre d'une paroi de séparation 80 (cette paroi pouvant être constituée avantageusement par une partie de la paroi latérale), puis le fluide de refroidissement ainsi divisé est dirigé vers chacun des flancs du mât par une première partie de canal 74 et respectivement par des deuxième et troisième parties de canaux 76, 78. Ainsi, pour refroidir la face du mât opposée aux orifices de distribution du fluide de refroidissement, ce dernier doit donc d'abord circuler à contre courant dans la deuxième partie de canal pour refroidir l'extrémité amont du mât 22 avant de s'engager sur l'autre face par la troisième partie de canal. Il peut être noté que, dans le circuit illustré, les canaux 74 et 78 devront contourner les tuyères d'injection 32 et 34. Pour ce faire, deux canaux 78 voisins se confondent en un seul au niveau du contournement. En aval de la tuyère, les deux canaux se reforment. Le débit de fluide de refroidissement se répartit uniformément entre les deux canaux (voir figure 2). De même, la figure 4 qui montre une vue en coupe réalisée selon l'axe IV-IV de la figure 2 au niveau d'un canal de refroidissement immédiatement supérieur ou immédiatement inférieur au précédent et passant également successivement par un ensemble de deux tuyères d'injection latérales 32, 34 et par une tuyère d'extrémité 42 fait apparaître un circuit de refroidissement analogue au précédent mais dont les orifices de distribution du fluide de refroidissement 86, 88 sont réalisés à l'opposé des précédents (par rapport à l'axe longitudinal du mât) dans la seconde paroi latérale 72 au niveau de la cavité 50. Comme précédemment, une paroi de séparation 90, constituée de préférence d'une partie de la paroi 72, permet de diviser le fluide de refroidissement en deux flux qui vont parcourir de façon analogue au trajet du canal précédent, mais à partir de la face opposée, d'une part une première partie de canal 92 et d'autre part des deuxième et troisième parties de canaux 94, 96. Il est important de noter que compte tenu de la longueur différente des trajets pouvant être parcourus par le fluide de refroidissement en fonction de l'emplacement des canaux dans le mât (trajet direct de l'amont vers l'aval, trajet de l'amont vers l'aval contournant une tuyère d'injection, trajet vers l'amont puis retour direct vers l'aval, trajet vers l'amont puis retour vers l'aval en contournant une bouche d'injection), il convient, pour assurer une répartition uniforme du fluide de refroidissement entre tous ces canaux, de prévoir des calibrages différents au niveau des orifices de distribution pour ces différents types de trajets.

La face d'extrémité du mât 42 est refroidie naturellement dans le prolongement des canaux 74, 78; 92, 96 des deux faces latérales, le fluide de refroidissement étant ensuite ramené dans la cavité d'alimentation la plus en aval 64 pour être injecté par les tuyères d'injection d'extrémité 42 en forme de tuyères supersoniques.

La réalisation des canaux de refroidissement ne pose pas de problèmes particuliers et l'homme du métier pourra à cet effet mettre en oeuvre les méthodes de fabrication les plus diverses. Notamment, un simple usinage (par exemple un fraisage) ou une électroérosion (EDM) (EDM fil notamment) peuvent tout d'abord être envisagés pour creuser ces canaux de refroidissement dans les parois 70, 72 avant de les recouvrir en ayant recours à une méthode de projection plasma ou à une électrodéposition. Mais, l'adjonction d'une simple tôle brasée ou soudée 98 recouvrant l'ensemble de la surface externe du mât, comme le montrent les figures 3 à 5, est tout aussi envisageable (on notera ici que les figures 2 et 2a ont été volontairement représentées sans cette tôle de couverture pour faciliter la compréhension de l'invention).

Au niveau du bord d'attaque amont 22, le besoin d'un refroidissement plus important et la nécessité de réaliser un rayon de courbure externe le plus faible possible (typiquement 1,5mm) pour limiter les pertes de pressions totales dans l'écoulement d'air en amont du mât impose, de préférence, de réaliser un circuit de refroidissement indépendant comportant une cavité spécifique d'alimentation 100 percée perpendiculairement à l'écoulement d'air, à l'image des cavités d'alimentation en combustible, et dans laquelle circulera, avantageusement de bas en haut, le fluide de refroidissement. Toutefois, on notera que, comme le montre la variante de réalisation de la figure 5, lorsque les températures en jeu sont moins importantes (cas d'un statoréacteur par exemple), le circuit de refroidissement des flancs et de l'extrémité aval du mât peut également être utilisé pour le refroidissement du bord d'attaque amont de ce mât, le fluide de refroidissement passant alors également directement derrière ce bord. Bien entendu, comme précédemment, un calibrage adéquat des différents canaux de refroidissement permettra de garantir une répartition uniforme du fluide de refroidissement.

Un mât d'injection de 100 mm de hauteur (pour une longueur de 340mm , une largeur de 20mm, un bord d'attaque de 1,5mm et un angle d'attaque de 6°) comportant trente-deux canaux de refroidissement sur chaque face (chacun de 2mm de largeur environ), ce qui permet d'assurer une grande surface d'échange, trois cavités d'alimentation en hydrogène et pourvu d'un refroidissement indépendant du bord d'attaque, placé dans une veine d'air chaud, pour une gamme de vitesses de vol de Mach 6 à Mach 8, permet d'obtenir les caractéristiques de tenue mécanique attendues pour un propulseur sans compresseur d'air du type superstatoréacteur.

## Revendications

1. Mât d'injection pour propulseur sans compresseur d'air comportant un corps (20) placé dans un écoulement d'air chaud, ce corps comportant des tuyères d'injection de combustible (32, 34, 42) et une pluralité de cavités (50-64) percées dans ce corps perpendiculairement à cet écoulement d'air et occupant l'ensemble de l'espace intérieur de ce corps pour ne laisser subsister qu'une structure formée de première et seconde parois latérales (70, 72) et de nervures internes (68) séparant ces différentes cavités, certaines de ces cavités constituant des cavités d'alimentation (50, 58,64) en combustible des tuyères d'injection, caractérisé en ce qu'il comporte un circuit de refroidissement formé à partir de canaux de refroidissement (74, 76, 78; 92, 94, 96) disposés en superposition sur chacune des parois latérales de ce corps selon une pluralité de niveaux et alimentés en fluide de refroidissement, à chaque niveau successif alternativement sur l'une ou l'autre des faces de ce mât, à partir d'une cavité d'alimentation en fluide de refroidissement (50) percée dans ce corps perpendiculairement à l'écoulement d'air.

2. Mât d'injection selon la revendication 1, caractérisé en ce que ladite cavité d'alimentation en fluide de refroidissement est située au plus près d'une extrémité amont du mât (22).

3. Mât d'injection selon la revendication 2, caractérisé en ce que ladite cavité comporte au niveau de chaque canal de refroidissement deux orifices de calibrage (82, 84; 86, 88) destinés à assurer une répartition uniforme du fluide de refroidissement dans ce canal quel que soit le trajet parcouru par le fluide de refroidissement sur l'une ou l'autre face du mât.

4. Mât d'injection selon la revendication 3, caractérisé en ce que lesdits orifices sont réalisés sur l'une des parois latérales (70, 72).

5. Mât d'injection selon la revendication 3, caractérisé en ce qu'il comporte en outre une paroi de séparation (80, 90) placée dans chaque canal de refroidissement en sortie des orifices de calibrage et destinée à diviser le fluide de refroidissement en deux flux séparés pour le refroidissement de chacune des faces du mât.

6. Mât d'injection selon la revendication 1, caractérisé en ce que ladite cavité d'alimentation en fluide de refroidissement est constituée par l'une des cavités d'alimentation en combustible (50).

7. Mât d'injection selon la revendication 1, caractérisé en ce qu'il comporte des tuyères d'injection latérales (32, 34) débouchant sur chacune des parois latérales (70, 72), et alimentées à partir d'une cavité centrale (58) percée dans le corps perpendiculairement à l'écoulement d'air.

8. Mât d'injection selon la revendication 7, caractérisé en ce que, au niveau des tuyères d'injection latérales (32, 34), les deux canaux de refroidissement immédiatement voisins situés en amont de chaque tuyère se confondent en un seul canal pour se reformer en aval, les débits de refroidissement se répartissant uniformément entre les deux canaux.

9. Mât d'injection selon la revendication 1, caractérisé en ce qu'il comporte en outre un circuit de refroidissement indépendant comportant une cavité spécifique d'alimentation (100) disposée au niveau de l'extrémité amont (22) de ce mât, perpendiculairement à l'écoulement d'air, et dans laquelle circule le fluide de refroidissement, afin de permettre l'obtention d'un rayon de bord d'attaque de très faible dimension.

10. Mât d'injection selon la revendication 1, caractérisé en ce qu'il comporte au moins une tuyère d'injection d'extrémité aval (42) qui débouche dans une cavité percée dans le corps (20), perpendiculairement à l'écoulement de l'air, au plus près d'une extrémité aval du mât (40) et alimentée par le fluide de refroidissement issu des différents canaux de refroidissement.

11. Mât d'injection selon l'une quelconque des revendications 1 à 10, caractérisé en ce que le fluide de refroidissement est de l'hydrogène.

12. Propulseur sans compresseur d'air comportant au moins un mât d'injection (20) selon l'unes des revendications 1 à 11.

## Patentansprüche

1. Einspritzstrebe für ein Triebwerk ohne Luftkompressor, die einen Körper (20) aufweist, der in einer Heißluftströmung angeordnet ist, wobei dieser Körper Brennstoffeinspritzdüsen (32, 34, 42) und eine Vielzahl von Hohlräumen (50-64) aufweist, die in diesen Körper senkrecht zu dieser Luftströmung eingearbeitet sind und den gesamten Innenraum dieses Körpers einnehmen, um nur eine Struktur übrigzulassen, die aus einer ersten und einer zweiten Seitenwand (70, 72) und inneren, diese verschiedenen Hohlräume trennenden Rippen (68) besteht, wobei einige dieser Hohlräume Hohlräume ((50, 58, 64) für die Brennstoffzufuhr in die Einspritzdüsen bilden, dadurch gekennzeichnet, daß sie einen Kühlkreislauf aufweist, der ausgehend von Kühlkanälen (74, 76, 78; 92, 94, 96) gebildet wird, die auf jeder der Seitenwände dieses Körpers in mehreren Höhen übereinanderliegend angeordnet sind und auf jeder der aufeinanderfolgenden Höhen abwechselnd auf der einen oder der anderen Seite dieser Strebe ausgehend von einem Hohlraum (50) für die Kühlfluidzufuhr mit Kühlfluid gespeist werden, der in diesen Körper senkrecht zur Luftströmung eingearbeitet ist.

2. Einspritzstrebe nach Anspruch 1, dadurch gekennzeichnet, daß der Hohlraum zur Kühlfluidzufuhr sich so nahe wie möglich an einem stromaufwärts liegenden Ende der Strebe (22) befindet.

3. Einspritzstrebe nach Anspruch 2, dadurch gekennzeichnet, daß dieser Hohlraum in Höhe jedes Kühlkanals zwei Kalibrieröffnungen (82, 84; 86, 88) besitzt, die eine gleichmäßige Verteilung des Kühlfluids in diesem Kanal gewährleisten sollen, unabhängig von der vom Kühlfluid auf der einen oder der anderen Seite der Strebe durchflossenen Wegstrecke.

4. Einspritzstrebe nach Anspruch 3, dadurch gekennzeichnet, daß die Öffnungen sich auf einer der Seitenwände (70, 72) befinden.

5. Einspritzstrebe nach Anspruch 3, dadurch gekennzeichnet, daß sie weiter eine Trennwand (80, 90) besitzt, die in jedem Kühlkanal am Ausgang der Kalibrieröffnungen angeordnet und dazu bestimmt ist, das Kühlfluid zur Kühlung jeder der Seiten der Strebe in zwei getrennte Ströme aufzuteilen.

6. Einspritzstrebe nach Anspruch 1, dadurch gekennzeichnet, daß der Hohlraum zur Kühlfluidzufuhr aus einem der Hohlräume zur Brennstoffzufuhr (50) besteht.

7. Einspritzstrebe nach Anspruch 1, dadurch gekennzeichnet, daß sie seitliche Einspritzdüsen (32, 34) aufweist, die an jeder der Seitenwände (70, 72) münden und ausgehend von einem zentralen Hohlraum (58) gespeist werden, der senkrecht zum Luftstrom in den Körper eingearbeitet ist.

8. Einspritzstrebe nach Anspruch 7, dadurch gekennzeichnet, daß in Höhe der seitlichen Einspritzdüsen (32, 34) die beiden direkt benachbarten Kühlkanäle, die sich stromaufwärts vor jeder Düse befinden, in einen einzigen Kanal zusammenfallen, um sich stromabwärts neu zu bilden, wobei die Kühldurchsätze sich gleichmäßig auf die beiden Kanäle verteilen.

9. Einspritzstrebe nach Anspruch 1, dadurch gekennzeichnet, daß sie weiter einen unabhängigen Kühlkreislauf besitzt, der einen spezifischen Zufuhrhohlraum (100) aufweist, der sich in Höhe des stromaufwärts liegenden Endes (22) dieser Strebe senkrecht zum Luftstrom befindet und in dem das Kühlfluid fließt, um mindestens einen Vorderkantenradius zu erhalten, der so gering wie möglich ist.

10. Einspritzstrebe nach Anspruch 1, dadurch gekennzeichnet, daß sie mindestens eine Einspritzdüse (42) am stromabwärts liegenden Ende aufweist, die in einen Hohlraum mündet, der in den Körper (20) senkrecht zum Luftstrom so nahe wie möglich an einem stromabwärts liegenden Ende (40) der Strebe eingearbeitet ist, und mit dem Kühlfluid gespeist wird, das aus den verschiedenen Kühlkanälen kommt,

11. Einspritzstrebe nach einem beliebigen der Ansprüche 1 bis 10, dadurch gekennzeichnet, daß das Kühlfluid Wasserstoff ist.

12. Triebwerk ohne Luftkompressor, das mindestens eine Einspritzstrebe (20) nach einem der Ansprrüche 1 bis 11 aufweist.

## Claims

1. An injector strut for a thruster having no air compressor, the strut comprising a body (20) placed in a flow of hot air, said body having fuel injection nozzles (32, 34, 42) and a plurality of cavities (50-64) pierced in the body perpendicularly to said flow of air and together occupying the inside space of said body so as to leave only a structure formed by first and second side walls (70, 72) and internal ribs (68) separating the various cavities, some of the cavities leading to feed cavities (50, 58, 64) for feeding fuel to the injection nozzle, the strut being characterized in that it includes a cooling circuit made up of cooling channels (74, 76, 78; 92, 94, 96) superposed on each of the side walls of said body over a plurality of levels and fed with cooling fluid at each successive level in alternation on one face and the other face of said strut, from a cooling fluid feed cavity (50) pierced in the body perpendicularly to the air flow.

2. An injection strut according to claim 1, characterized in that said cooling fluid feed cavity is situated as close as possible to an upstream end of the strut (22).

3. An injection strut according to claim 2, characterized in that said cavity has two calibration orifices (82, 84; 86, 88) level with each cooling channel to ensure uniform distribution of the cooling fluid in said channel whatever the path followed by the cooling fluid over one or other face of the strut.

4. An injection strut according to claim 3, characterized in that said orifices are made in one of the side walls (70, 72).

5. An injection strut according to claim 3, characterized in that it further includes a separation wall (80, 90) placed in each cooling channel at the outlet from the calibration orifices and designed to split the fluid flow into two separate flows for cooling each of the faces of the strut.

6. An injection strut according to claim 1, characterized in that said cooling fluid feed cavity is constituted by one of the fuel feed cavities (50).

7. An injection strut according to claim 1, characterized in that it includes side injection nozzles (32, 34) opening out into each of the side walls (70, 72) and fed from a central cavity (58) pierced in the body perpendicularly to the air flow.

8. An injection strut according to claim 7, characterized in that level with the side injection nozzles (32, 34) the two immediately adjacent cooling channels situated upstream from each nozzle combine to form a single channel and are reformed downstream therefrom, the cooling flows being shared uniformly between the two channels.

9. An injection strut according to claim 1, characterized in that it further includes an independent cooling circuit having a specific feed cavity (100) disposed level with the upstream end (22) of the strut, perpendicularly to the air flow, and in which the cooling fluid circulates for the purpose of obtaining a leading edge with a radius that is of very small size.

10. An injection strut according to claim 1, characterized in that it includes at least one downstream end injection nozzle (42) which opens out into a cavity pierced in the body (20) perpendicularly to the flow of air as close as possible to a downstream end of the strut (40) and fed with cooling fluid from the various cooling channels.

11. An injection strut according to any one of claims 1 to 10, characterized in that the cooling fluid is hydrogen.

12. A thruster without an air compressor including at least one injection strut (20) according to any one of claims 1 to 11.
